# EUROPEAN PATENT APPLICATION

(11) **EP 4 534 732 A1**
(43) Date of publication of application: **09.04.2025**
(21) Application number: 23815470.2
(22) Date of filing: 31.01.2023
(51) Int. Cl.: C25B 1/23, B01D 53/14, B01D 53/62, B01D 53/78, B01D 53/81, B01D 53/82, C25B 1/04, C25B 9/00, C25B 15/08

(54) **APPARATUS FOR PRODUCING CARBON MONOXIDE, APPARATUS FOR ELECTROLYZING CARBON DIOXIDE AND METHOD FOR ELECTROLYZING CARBON DIOXIDE**

(30) Priority: 30.05.2022 JP 2022087736
(71) Applicant: Kabushiki Kaisha Toshiba, Tokyo 105-0023 (JP); Toshiba Energy Systems & Solutions Corporation, Saiwai-ku Kawasaki-shi Kanagawa 2120013 (JP)
(72) Inventor: OGAWA, Takashi, Tokyo 105-8001 (JP); MURAMATSU, Takehiko, Kawasaki-shi, Kanagawa 212-0013 (JP); KITAMURA, Hideo, Kawasaki-shi, Kanagawa 212-0013 (JP); OTA, Hiroyuki, Kawasaki-shi, Kanagawa 212-0013 (JP); MIZUGUCHI, Koji, Kawasaki-shi, Kanagawa 212-0013 (JP)
(74) Representative: Hoffmann Eitle
(86) International application number: PCT/JP2023/003066
(87) International publication number: WO 2023/233706

(57) **Abstract**

There are provided a CO production device and a CO₂ electrolysis device which allow a promotion of effective use of CO₂ and a reduction in emission of CO₂ into the air. A CO production device and CO₂ electrolysis device 1 of an embodiment includes: a CO₂ electrolysis apparatus 3 including a cathode 6 which electrolyzes CO₂ to produce CO and an anode 7 which oxidizes a substance to be oxidized to produce an oxide; a CO purifier 4 which purifies CO from a gas containing CO supplied from the CO₂ electrolysis apparatus 3; and a H₂ purifier 5 which purifies H₂ from a CO-extracted residual gas discharged from the CO purifier.

## Description

### FIELD

Embodiments of the present invention relate to a carbon monoxide production device, a carbon dioxide electrolysis device, and a carbon dioxide electrolysis method.

### BACKGROUND

Carbon dioxide (CO₂) generated by combusting fossil fuels such as natural gas, coal, and petroleum is considered the main factor behind global warming due to a greenhouse effect, and a reduction in use of the fossil fuels is required. As large-scale generation sources of CO₂, a thermal power plant, a steel plant, and the like can be cited. If CO₂ is removed from an exhaust gas emitted from these CO₂ generation sources and the emission into the air is reduced, the cause of global warming can be efficiently removed. Moreover, if the CO₂ removed from the exhaust gas is reduced by some kinds of means and carbon compounds are produced, it can be recycled to carbon compounds similar to fuels and chemicals derived from fossil resources.

A CO₂ electrolysis device (CO production device) which reduces CO₂ to produce a carbon compound such as carbon monoxide (CO) is suitable for conversion of CO₂ into the carbon compound such as CO. In the CO₂ electrolysis device, a CO purification device which purifies CO from a gas containing CO discharged from a cathode is used. A part of a purge gas, after the CO purification, generated from a conventional CO purification device is supplied to the CO₂ electrolysis device, and the remainder thereof is made harmless by air combustion to be emitted into the air. In CO₂ supplied to the CO production device, CO₂ supplied for purging oxygen generated from the CO₂ electrolysis device, and CO₂ discharged from a combustion apparatus are emitted into the air without being effectively used. Thus, a carbon monoxide production device which effectively uses the supplied CO₂ to reduce the emission of CO₂ into the air is required.

### PRIOR ART DOCUMENT

### PATENT DOCUMENT

Patent Document 1: International Publication WO 2014/154253
Patent Document 2: Japanese Laid-open Patent Publication No. 2021-055124
Patent Document 3: Japanese Laid-open Patent Publication No. 2019-218578
Patent Document 4: Japanese Laid-open Patent Publication No. 2016-124759

### SUMMARY OF THE INVENTION

A problem to be solved by the present invention is to provide a carbon monoxide production device, a carbon dioxide electrolysis device, and a carbon dioxide electrolysis method which allow a promotion of effective use of CO₂ and a reduction in emission of CO₂ into the air.

A carbon monoxide production device of an embodiment includes: a carbon dioxide electrolysis apparatus including a cathode which reduces carbon dioxide to produce carbon monoxide, and an anode which oxidizes a substance to be oxidized to produce an oxide; a carbon monoxide purifier which purifies carbon monoxide from a gas containing carbon monoxide supplied from the cathode of the carbon dioxide electrolysis apparatus; and a hydrogen purifier which purifies hydrogen from a carbon monoxide-extracted residual gas discharged from the carbon monoxide purifier.

### BRIEF DESCRIPTION OF THE DRAWINGS

[Fig. 1] A diagram illustrating a carbon monoxide production device and carbon dioxide electrolysis device of an embodiment.
[Fig. 2] A diagram illustrating a first modified example of the carbon monoxide production device and carbon dioxide electrolysis device illustrated in Fig. 1.
[Fig. 3] A diagram illustrating a second modified example of the carbon monoxide production device and carbon dioxide electrolysis device illustrated in Fig. 1.
[Fig. 4] A diagram illustrating a third modified example of the carbon monoxide production device and carbon dioxide electrolysis device illustrated in Fig. 1.

### DETAILED DESCRIPTION

Hereinafter, a carbon monoxide production device, a carbon dioxide electrolysis device, and a carbon dioxide electrolysis method of embodiments will be described with reference to the drawings. In each embodiment presented below, substantially the same constituent parts are denoted by the same reference signs, and a description thereof may be partially omitted. The drawings are schematic, and the relation of the thickness and planar dimension, a thickness ratio among the parts, and so on may be different from actual ones. Note that a symbol of "~" in the following description indicates a range between an upper limit value and a lower limit value of the respective numerical values. In this case, the range of the numerical values includes the upper limit value and the lower limit value.

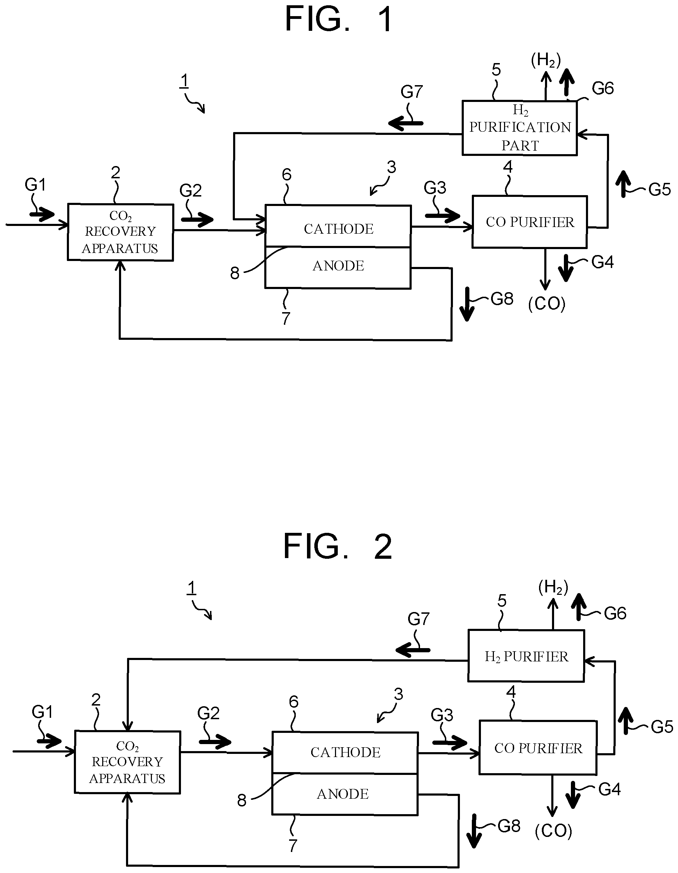

Fig. 1 is a diagram illustrating a carbon monoxide production device and carbon dioxide electrolysis device of the embodiment. A carbon monoxide (CO) production device and carbon dioxide (CO₂) electrolysis device 1 illustrated in Fig. 1 includes a CO₂ recovery apparatus 2 which recovers CO₂ from a gas containing carbon dioxide (CO₂), a CO₂ electrolysis apparatus 3 which electrolyzes and reduces CO₂ to produce carbon monoxide (CO), a CO purifier 4 which purifies CO from a gas containing CO supplied from the CO₂ electrolysis apparatus 3, and a H₂ purifier 5 which purifies hydrogen (H₂) from a CO-extracted residual gas discharged from the CO purifier 4.

The CO₂ recovery apparatus 2 is configured to separate and recover CO₂ from an emission gas G1 containing CO₂ (a gas containing CO₂) emitted from a thermal power plant, a waste incineration plant, a steel plant, and the like, and supply a CO₂ gas G2 whose CO₂ concentration has been increased to the CO₂ electrolysis apparatus 3. To the separation and recovery of CO₂, for example, a chemical absorption method of using a chemical absorption solution such as an amine aqueous solution, a solid absorption method of using a solid absorbent such as an amine compound, a membrane separation method of using a CO₂ separation membrane, a physical adsorption method of using an inorganic substance such as zeolite as an adsorbent, or the like is applied. For example, in the chemical absorption method and device which use the amine aqueous solution, the emission gas G1 is supplied to an absorption tower in which the amine aqueous solution is sprayed, the amine aqueous solution absorbing CO₂ is heated in a regeneration tower, and CO₂ diffused from the amine aqueous solution is recovered. The CO₂ recovery method and device applied to the CO₂ recovery apparatus 2 are not particularly limited, and various methods and devices which allow the recovery of CO₂ from the emission gas G1 can be applied.

The CO₂ electrolysis apparatus 3 is a CO₂ electrolysis device having an electrolysis cell, and includes a cathode 6 and an anode 7. The cathode 6 includes a reduction electrode (cathode), the anode 7 includes an oxidation electrode (anode), and an electrolytic solution is made to flow through or fills at least the anode 7. A CO₂ gas may be made to flow through the cathode 6, or an electrolytic solution containing CO₂ may be made to flow through or may fill it. In the cathode 6 or the anode 7, for example, for the electrolytic solution, a solution using water (H₂O), for example, an aqueous solution containing an optional electrolyte can be used. As the aqueous solution containing the electrolyte, there can be cited an aqueous solution containing, for example, phosphate ions (PO₄²⁻), borate ions (BO₃³⁻), sodium ions (Na⁺), potassium ions (K⁺), calcium ions (Ca²⁺), lithium ions (Li⁺), cesium ions (Cs⁺), magnesium ions (Mg²⁺), chloride ions (Cl⁻), hydrogen carbonate ions (HCO₃⁻), carbonate ions (CO₃²⁻), hydroxide ions (OH⁻), or the like. As a concrete example of the electrolytic solution, an alkaline aqueous solution in which KOH, KHCO₃, K₂CO₃, or the like is dissolved can be cited.

To the cathode 6, the CO₂ gas G2 recovered in the CO₂ recovery apparatus 2 is supplied. As described in detail later, to the cathode 6, a CO₂ gas as a H₂-extracted residual gas discharged from the H₂ purifier 5 is supplied in addition to the CO₂ gas G2. The cathode 6 has a non-illustrated gas flow path, and the CO₂ gas is supplied to such a gas flow path facing the reduction electrode. The anode 7 has a non-illustrated liquid flow path, for example, and the electrolytic solution is supplied to such a liquid flow path facing the oxidation electrode. Anon-illustrated power supply is connected to the reduction electrode and the oxidation electrode. The cathode 6 and the anode 7 are separated by a membrane 8 capable of moving ions of hydrogen ions (H⁺), hydroxide ions (OH⁻), carbonate ions (CO₃²⁻), hydrogen carbonate ions (HCO₃⁻), or the like, for example, an ion exchange membrane. The CO₂ electrolysis apparatus 3 (the CO₂ electrolysis device having the electrolysis cell) may have a single electrolysis cell, a configuration to connect electrolysis cells in a plane direction, or a configuration to stack and integrate a plurality of the electrolysis cells.

In the cathode 6 and the anode 7 of the CO₂ electrolysis apparatus 3, the reactions as presented below occur. In the cathode 6, as presented in the following formula (1), an electrolytic reaction and a reduction reaction of CO₂ occur. CO and a carbonate ion (CO₃²⁻) are produced by the reduction reaction of CO₂.

2CO₂ + 2e⁻ → CO + CO₃²⁻ ... (1)

The carbonate ion (CO₃²⁻) produced in the cathode 6 moves to the anode 7 via the membrane 8. In the anode 7, as presented in the following formula (2), an oxidation reaction of the carbonate ion (CO₃²⁻) produced in the cathode 6 occurs, and CO₂ and O₂ are produced.

CO₃²⁻ → CO₂ + 0.5O₂ + 2e⁻ ... (2)

Moreover, in the cathode 6, an electrolytic reaction of H₂O in the electrolytic solution occurs, and as presented in the following formula (3), hydrogen (H₂) and hydroxide ions (OH⁻) are produced.

2H₂O + 2e⁻ → H₂ + 2OH⁻ ... (3)

The produced hydroxide ions (OH⁻) move to the anode 7 via the membrane 8, and as presented in the following formula (4), water (H₂O) and oxygen (O₂) are produced in the anode 7.

2OH⁻ → 0.5O₂ + H₂O + 2e⁻ ... (4)

Further, in the anode 7, as presented in the following formula (5), water (H₂O) in the electrolytic solution is electrolyzed, and oxygen (O₂) and hydrogen ions (H⁺) are produced.

2H₂O → 4H⁺ + O₂ + 4e⁻ ... (5)

The produced hydrogen ions (H⁺) move to the cathode 6 via the membrane 8. In the cathode 6 which the hydrogen ions (H⁺) reach and in which electrons (e⁻) reach the cathode through an external circuit, hydrogen is produced by a reaction presented in the following formula (6).

4H⁺ + 4e⁻ → 2H₂ ... (6)

In the cathode 6, CO is produced by the reduction of CO₂ as presented in the formula (1), and H₂ is produced by the electrolytic reaction of H₂O as presented in the formula (3). The CO and H₂ produced in the cathode 6 are discharged from the cathode 6 with unreacted CO₂. A mixed gas G3, discharged from the cathode 6, containing CO and H₂ and CO₂ is supplied to the CO purifier 4. In the CO purifier 4, CO is purified from the mixed gas G3 containing CO and H₂ and CO₂. For the purification of CO (separation of CO), for example, a pressure swing adsorption method (PSA method) of using CO adsorption and desorption caused by pressure fluctuations of an adsorbent to separate and recover CO by adsorbing CO under pressurization and desorbing CO under depressurization, specifically, a CO-PSA separation and purification device using an adsorbent in which monovalent copper is supported on alumina, or the like, can be applied, and these are not particularly restrictive.

A CO gas G4 separated and recovered in the CO purifier 4 is supplied to, for example, a carbon-containing liquid fuel synthesis device using a Fischer-Tropsch synthesis reaction, or the like, which is not illustrated in Fig. 1, as a fuel component. A residual gas, discharged from the CO purifier 4, subjected to the separation and recovery of CO, that is, a CO-extracted residual gas G5 contains H₂ and CO₂. Such a CO-extracted residual gas G5 is supplied to the hydrogen (H₂) purifier 5. In the H₂ purifier 5, H₂ is purified from the mixed gas G5 containing H₂ and CO₂. For the purification of H₂ (separation of H₂), for example, a H₂ separation and purification device applying a H₂-PSA method of using H₂ adsorption and desorption caused by pressure fluctuations of an adsorbent to separate and recover H₂ by adsorbing H₂ under pressurization and desorbing H₂ under depressurization, or a H₂ separation device using a H₂ separation membrane which selectively transmits H₂ can be applied, and these are not particularly restrictive.

A H₂ gas G6 separated and recovered in the H₂ purifier 5 is used as a fuel for various devices of a fuel cell vehicle or the like and a fuel component in liquid fuel synthesis devices or the like although they are not illustrated in Fig. 1. For example, in the above-described carbon-containing liquid fuel synthesis device using the Fischer-Tropsch synthesis reaction, H₂ is used with CO, and thus may be supplied to such liquid fuel synthesis devices as a part of the fuel component. Moreover, the H₂ gas G6 separated and recovered in the H₂ purifier 5 may be stored in a tank or the like ones. A residual gas, discharged from the H₂ purifier 5, subjected to the separation and recovery of H₂, that is, a H₂-extracted residual gas G7 contains CO₂. CO and H₂ are separated and recovered from the mixed gas G3, and thus purity of CO₂ increases. Accordingly, the H₂-extracted residual gas G7 containing CO₂ can be supplied to the cathode 6 of the CO₂ electrolysis apparatus 3. Thus, use efficiency of CO₂ can be enhanced.

As described above, supplying the mixed gas G3, discharged from the cathode 6, containing CO and H₂ and CO₂ to the CO purifier 4 and the H₂ purifier 5 in order, and separating and recovering CO and separating and recovering H₂ allow not only a promotion of effective use of CO and H₂ but also effective use of a CO₂ gas as the residual gas G7 subjected to separation and recovery of CO and H₂ from the mixed gas G3. Specifically, in the CO production device 1 of the embodiment, the H₂-extracted residual gas G7 containing CO₂ is supplied to the cathode 6 of the CO₂ electrolysis apparatus 3, and thus the CO₂ gas (G7) can be effectively used without being emitted into the air.

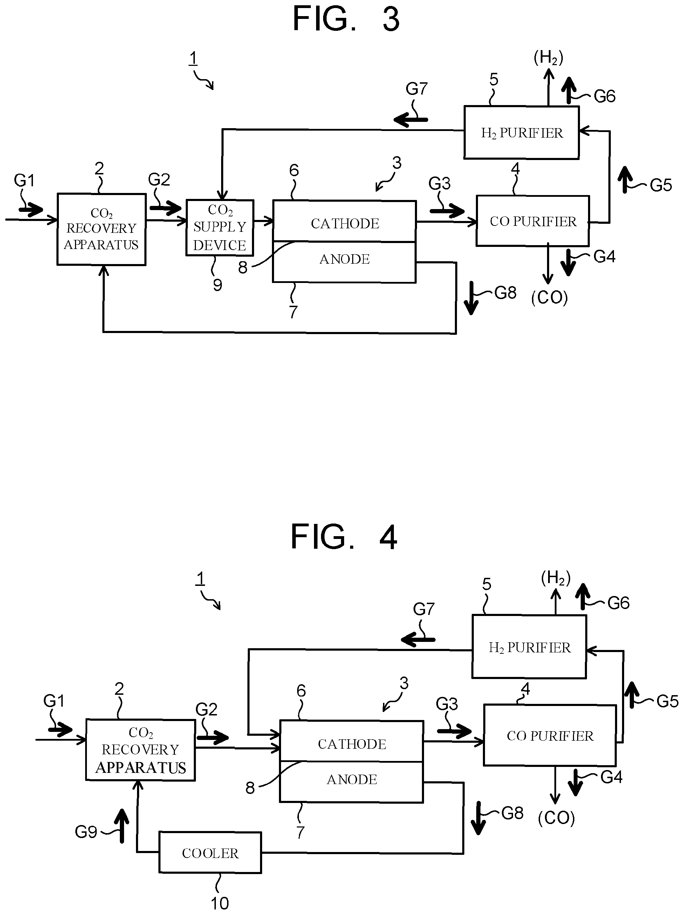

In Fig. 1, the CO₂ gas as the H₂-extracted residual gas G7 is directly supplied to the cathode 6 of the CO₂ electrolysis apparatus 3, and this is not restrictive. For example, in a case where the CO₂ recovery apparatus 2 has a flow rate regulating mechanism of a CO₂ gas, or the like, as illustrated in Fig. 2, the CO₂ gas G7 may be supplied to the CO₂ recovery apparatus 2 and mixed with the CO₂ gas recovered in the CO₂ recovery apparatus 2 to be supplied to the cathode 6 of the CO₂ electrolysis apparatus 3. In this case, a flow rate is regulated in the CO₂ recovery apparatus 2, and the CO₂ gas is supplied to the cathode 6 of the CO₂ electrolysis apparatus 3. Alternatively, as illustrated in Fig. 3, for example, a CO₂ supply device 9 which stores the CO₂ gas once and regulates a flow rate of the stored CO₂ gas to supply it to the cathode 6 may be provided between the CO₂ recovery apparatus 2 and the cathode 6 of the CO₂ electrolysis apparatus 3, and the CO₂ gas may be supplied to such a CO₂ supply device 9.

In the anode 7 of the CO₂ electrolysis apparatus 3, as presented in the formula (2) and the formula (4), oxygen (O₂) and carbon dioxide (CO₂) are produced by the oxidation of a carbonate ion (CO₃²⁻) and the oxidation of hydroxide ions (OH⁻). The O₂ and CO₂ produced in the anode 7 are discharged from the anode 7. A mixed gas G8, discharged from the anode 7, containing O₂ and CO₂ is supplied to the CO₂ recovery apparatus 2. The electrolysis cell as the CO₂ electrolysis apparatus 3 is operated at a temperature of, for example, approximately 80°C. Accordingly, a temperature of the mixed gas G8 discharged from the anode 7 may be approximately 80°C. The mixed gas G8 with such a temperature may adversely affect the CO₂ recovery device using, for example, an amine aqueous solution when directly supplied to the CO₂ recovery apparatus 2. Therefore, as illustrated in Fig. 4, a cooler 10 may be provided in a pipe which supplies the mixed gas G8 from the anode 7 to the CO₂ recovery apparatus 2. By supplying a mixed gas G9 cooled by the cooler 10 to the CO₂ recovery apparatus 2, recovery efficiency of CO₂ by using the CO₂ recovery apparatus 2 can be maintained.

As described above, CO₂ in the mixed gas G8 discharged from the anode 7 is recovered in the CO₂ recovery apparatus 2 similarly to CO₂ in the emission gas (a gas containing CO₂) G1. Accordingly, the CO₂ discharged from the anode 7 can also be effectively used similarly to CO₂ discharged from the cathode 6. These make it possible to reuse unreacted CO₂ discharged from the cathode 6 and the CO₂ reproduced in the anode 7 in addition to the recovery of CO and H₂ produced in the cathode 6. Consequently, CO, H₂, and most of CO₂ as the produced gases and the emission gas in the CO production device 1 can be effectively used or reused. For example, without emitting the unreacted CO₂ or the reproduced CO₂ into the air, the use efficiency of CO₂ can be greatly enhanced. Although a reaction mechanism is different, a configuration of the above-described electrolysis device is also applicable to a solid oxide eletrolyzer cell (SOEC) which performs supply of a CO₂ gas or a CO₂/H₂ mixed gas to a cathode and/or supply of a CO₂ gas to an anode.

Note that the configurations of the above-described embodiments are applicable in combination with each other, and parts thereof are also replaceable. While certain embodiments of the present invention have been described above, these embodiments have been presented by way of example only, and are not intended to limit the scope of the invention. Indeed these embodiments described herein may be embodied in a variety of other forms; furthermore, various omissions, substitutions, and changes in the form of the embodiments described herein may be made without departing from the spirit of the inventions. The accompanying claims and their equivalents are intended to cover such forms or modifications as would fall within the scope and spirit of the inventions.

### EXPLANATION OF REFERENCE SIGNS

1...CO production device, 2...CO₂ recovery apparatus, 3...CO₂ electrolysis apparatus, 4...CO purifier, 5...H₂ purifier, 6...cathode, 7...anode, 8...membrane, 9...CO₂ supply device, 10...cooler.

## Claims

1. A carbon monoxide production device comprising:
a carbon dioxide electrolysis apparatus including a cathode for reducing carbon dioxide to produce carbon monoxide, and an anode for oxidizing a substance to be oxidized to produce an oxide;
a carbon monoxide purifier configured to purify carbon monoxide from a gas containing carbon monoxide supplied from the cathode of the carbon dioxide electrolysis apparatus; and
a hydrogen purifier configured to purify hydrogen from a carbon monoxide-extracted residual gas discharged from the carbon monoxide purifier.

2. The carbon monoxide production device according to claim 1, wherein the hydrogen purifier is configured to discharge a hydrogen-extracted residual gas containing carbon dioxide and supply the hydrogen-extracted residual gas to the cathode of the carbon dioxide electrolysis apparatus.

3. The carbon monoxide production device according to claim 1, further comprising a carbon dioxide recovery apparatus configured to recover carbon dioxide from a gas containing carbon dioxide and supply the recovered carbon dioxide to the cathode of the carbon dioxide electrolysis apparatus.

4. The carbon monoxide production device according to claim 3, wherein the carbon dioxide electrolysis apparatus is configured to supply a gas, discharged from the anode, containing carbon dioxide to the carbon dioxide recovery apparatus.

5. The carbon monoxide production device according to claim 4, further comprising a cooler configured to cool the gas discharged from the anode of the carbon dioxide electrolysis apparatus and supply the cooled gas to the carbon dioxide recovery apparatus.

6. A carbon dioxide electrolysis device comprising:
a carbon dioxide electrolysis apparatus including a cathode for reducing carbon dioxide to produce carbon monoxide, and an anode for oxidizing a substance to be oxidized to produce an oxide;
a carbon monoxide purifier configured to purify carbon monoxide from a gas containing carbon monoxide supplied from the cathode of the carbon dioxide electrolysis apparatus; and
a hydrogen purifier configured to purify hydrogen from a carbon monoxide-extracted residual gas discharged from the carbon monoxide purifier.

7. The carbon dioxide electrolysis device according to claim 6, wherein the hydrogen purifier is configured to discharge a hydrogen-extracted residual gas containing carbon dioxide and supply the hydrogen-extracted residual gas to the cathode of the carbon dioxide electrolysis apparatus.

8. The carbon dioxide electrolysis device according to claim 6, further comprising a carbon dioxide recovery apparatus configured to recover carbon dioxide from a gas containing carbon dioxide and supply the recovered carbon dioxide to the cathode of the carbon dioxide electrolysis apparatus.

9. The carbon dioxide electrolysis device according to claim 8, wherein the carbon dioxide electrolysis apparatus is configured to supply a gas, discharged from the anode, containing carbon dioxide to the carbon dioxide recovery apparatus.

10. The carbon dioxide electrolysis device according to claim 9, further comprising a cooler configured to cool the gas discharged from the anode of the carbon dioxide electrolysis apparatus and supply the cooled gas to the carbon dioxide recovery apparatus.

11. A carbon dioxide electrolysis method comprising the steps of:
reducing carbon dioxide to produce carbon monoxide in a cathode, and oxidizing a substance to be oxidized to produce an oxide in an anode;
purifying carbon monoxide from a gas containing carbon monoxide supplied from the cathode; and
purifying hydrogen from a carbon monoxide-extracted residual gas after purifying carbon monoxide from the gas containing carbon monoxide.

12. The carbon dioxide electrolysis method according to claim 11, further comprising the step of supplying a hydrogen-extracted residual gas, after purifying hydrogen from the carbon monoxide-extracted residual gas, containing carbon dioxide to the cathode.

13. The carbon dioxide electrolysis method according to claim 11, further comprising the step of recovering carbon dioxide from a gas containing carbon dioxide in a carbon dioxide recovery apparatus and supplying the recovered carbon dioxide to the cathode.

14. The carbon dioxide electrolysis method according to claim 13, comprising the step of supplying a gas, discharged from the anode, containing carbon dioxide to the carbon dioxide recovery apparatus.

15. The carbon dioxide electrolysis method according to claim 14, further comprising the step of cooling the gas discharged from the anode and supplying the cooled gas to the carbon dioxide recovery apparatus.
